# EUROPÄISCHE PATENTANMELDUNG

(11) **EP 1 245 465 A1**
(43) Veröffentlichungstag der Anmeldung: **02.10.2002**
(21) Anmeldenummer: 02090106.2
(22) Anmeldetag: 12.03.2002
(51) Int. Cl.: B60R 22/34

(54) **Gurtaufroller**

(30) Priorität: 20.03.2001 DE 10113502
(71) Anmelder: TAKATA-PETRI (Ulm) GmbH, 89081 Ulm (DE)
(72) Erfinder: Glinka, Oliver, 89081 Ulm (DE)
(74) Vertreter: Rummler, Felix Dipl. Ing.

(57) **Zusammenfassung**

Die Erfindung betrifft einen Gurtaufroller für Sicherheitsgurte in Kraftfahrzeugen, der eine Spindel (10) zum Aufrollen des Sicherheitsgurtes aufweist, die bei Auslösung einer Aktivierungseinrichtung gegenüber einem festen Rahmen verriegelbar ist, und der ein hydraulisch arbeitendes kraftbegrenzendes Element (42) vorsieht, das im Verriegelungsfall zwischen Spindel (10) und Rahmen geschaltet ist.

## Beschreibung

Die Erfindung betrifft einen Gurtaufroller für Sicherheitsgurte in Kraftfahrzeugen, der eine Spindel zum Aufrollen des Sicherheitsgurtes aufweist, die bei Auslösung einer Aktivierungseinrichtung gegenüber einem festen Rahmen verriegelbar ist, und der ein kraftbegrenzendes Element vorsieht, das im Verriegelungsfall zwischen Spindel und Rahmen geschaltet ist.

Grundsätzlich sind derartige Gurtaufroller bekannt. Sie dienen dazu, im Falle eines Unfalls durch Verriegelung der Spindel gegenüber dem festen Rahmen, beispielsweise einem mit der Karosserie verbundenen Gurtaufrollergehäuse, eine Abwicklung des Sicherheitsgurtes zu verhindern.

Zur Vermeidung von Verletzungen durch den Sicherheitsgurt sind Gurtaufroller mit zumindest einem kraftbegrenzenden Element versehen, das die auf die Person, bzw. auf den Sicherheitsgurt wirkende Kraft auf einen vorbestimmten Wert begrenzt. Unter Überwindung eines durch das kraftbegrenzende Element gebildeten Widerstandes wird der Sicherheitsgurt von der Gurtaufwickelrolle abgewickelt, wobei in dem kraftbegrenzenden Element Energie dissipiert wird.

Das kraftbegrenzende Element kann bei einem solchen Gurtaufroller ein oder mehrere Bauteile aufweisen, die im Verriegelungsfall bei Überschreiten der vorbestimmten Kraft mechanisch deformiert werden. Als derartige deformierbare Bauteile werden beispielsweise Torsionsstäbe eingesetzt, die sich aufgrund einer Rotationsbewegung der Spindel in Gurtabwickelrichtung verdrehen.

Der Erfindung liegt die Aufgabe zugrunde, einen Gurtaufroller zu schaffen, der bei verschiedenen Aufprallgeschwindigkeiten eine erhöhte Sicherheit schafft.

Zur Lösung dieser Aufgabe ist ein Gurtaufroller mit den Merkmalen des Anspruch 1 vorgesehen. Ein derartiger Gurtaufroller zeichnet sich dadurch aus, daß als kraftbegrenzendes Element ein hydraulisch arbeitendes Element vorgesehen ist.

Aufgrund dieser Ausbildung ist bei blockiertem Gurtaufroller die Abwicklungslänge des Sicherheitsgurtes einerseits proportional zu der Masse der zu sichernden Person und andererseits zu einigen, sich aus den Eigenschaften des hydraulisch arbeitenden Elementes ergebenden physikalischen Größen. Ein großer Vorteil solcher hydraulisch arbeitenden kraftbegrenzenden Elemente ist also, daß die Abwicklungslänge des Sicherheitsgurtes im Gegensatz zu bekannten kraftbegrenzenden Elementen nicht von der Aufprallgeschwindigkeit des Kraftfahrzeugs abhängt.

Die Energie, mit der sich eine zu sichernde Person bei einem Auffahrunfall bewegt, beträgt *E=mv*^{*2*}/*2* (*m:* Masse der Person, *ν:* Aufprallgeschwindigkeit). Diese Energie *E* führt dazu, daß eine Kraft *F* auf den Sicherheitsgurt wirkt, welcher um eine Abwicklungslänge s abgewickelt wird.

Bei einer durch ein bekanntes kraftbegrenzendes Element konstant gehaltenen Kraft *F* ergibt sich aus *E=Fs,* daß die Abwicklungslänge *s* proportional zum Quadrat der Aufprallgeschwindigkeit ist: *s∼mν*^{*2*}/*2*. Das bedeutet, daß sich der Sicherheitsgurt bei höheren Aufprallgeschwindigkeiten weiter abrollen kann. Ein bekanntes kraftbegrenzende Element kann demnach immer nur auf einen bestimmten Aufprallgeschwindigkeitsbereich abgestimmt werden, während die Kraftbegrenzung im Falle davon verschiedener Aufprallgeschwindigkeiten nicht optimal wirkt.

Dagegen ist bei einem hydraulisch arbeitenden kraftbegrenzenden Element die Kraft *F*, die durch ein vorbeiströmendes Fluid auf einen Verdrängungskörper wirkt, proportional zum Quadrat der Strömungsgeschwindigkeit *ν*_{*fl*} (*F=cAρν*_{*fl*}^{*2*}/*2* mit *c*: Widerstandsbeiwert eines von einem Fluid umströmten Verdrängungskörpers, *A*: Querschnittsfläche des Verdrängungskörpers und ρ: Dichte des Fluids), so daß auch die zur Verdrängung des Fluids benötigte Energie proportional zum Quadrat der Strömungsgeschwindigkeit ist. Daher folgt mit *E=Fs* aus *scAρν*_{*fl*}^{*2*}/*2*=*mν*^{*2*}/*2* unter der Annahme *ν*_{*fl*}*∼ν,* daß *s∼m*/*cAρ*. Die Abwicklungslänge *s* des Sicherheitsgurtes ist bei einem hydraulischen Kraftbegrenzer somit keine Funktion der Aufprallgeschwindigkeit *ν*.

Durch die Einstellung der hydraulischen Parameter läßt sich daher eine vorbestimmte Abwicklungslänge des Sicherheitsgurtes einstellen, die lediglich durch die Masse der zu sichernden Person beeinflußt ist. Ein bei allen denkbaren Aufprallgeschwindigkeiten definiert und optimal ablaufender Gurtabwicklungsprozeß gewährleistet somit eine gleichbleibend gute Kraftbegrenzung und somit eine erhöhte Sicherheit.

Aufgrund der quadratischen Abhängigkeit der Kraft *F* von der Strömungsgeschwindigkeit *ν*_{*fl*} (*F*=*cA*ρ*ν*_{*fl*}^{*2*}/*2*) in einem hydraulisch arbeitenden kraftbegrenzenden Element ist wegen *ν*_{*fl*}*∼ν* auch die Kraft, die auf den Sicherheitsgurt bzw. auf die zu sichernde Person wirkt, proportional zur jeweiligen Geschwindigkeit nach Beginn der Aufprallverzögerung. Der Kraftverlauf ist also nicht konstant oder gar ansteigend wie bei bekannten Kraftbegrenzersystemen sondern degressiv (wie die Geschwindigkeit) und in ihrem Verlauf wie bei bekannten Hydrauliksystemen leicht einstellbar. Die zu sichernde Person ist dadurch einem harmonischen Kraftverlauf ausgesetzt - wie bei einem vorsichtigen Bremsen, wenn die Kraft am Bremspedal langsam zurückgenommen wird.

Vorteilhafte Ausführungsformen der Erfindung sind in den Unteransprüchen, der Beschreibung und den Zeichnungen beschrieben:

So ist in einer bevorzugten Ausbildung der Erfindung durch eine auf die Spindel wirkende, einen vorbestimmten Wert überschreitende Kraft ein Hydraulikfluid verdrängbar. Aufgrund dieser Ausbildung wird anstelle mechanisch deformierbarer Bauteile ein Hydraulikfluid zur Kraftbegrenzung eingesetzt, was eine Vereinfachung der im Gurtaufroller vorkommenden Mechanik bedeutet und zu einer erheblichen Gewichtseinsparung führen kann.

Als vorteilhaft erweist es sich dabei, wenn das Hydraulikfluid durch ein Verdrängungselement innerhalb eines Fluidbehältnisses oder aus einem Fluidbehältnis hinaus verdrängbar ist. Das Hydraulikfluid kann sich somit in einem abgeschlossenen Behältnis befinden, in dem es durch das Verdrängungselement entweder umgewälzt oder von einem Bereich des Behältnisses in einen anderen bewegt wird, oder es kann durch eine Öffnung aus dem Behältnis hinausgedrängt werden. Beide Methoden erfordern bei geeigneter Wahl des Hydraulikfluids den Aufwand einer bestimmten Energie, die bei Verdrängung des Hydraulikfluids dissipiert wird.

Besonders bevorzugt ist eine Ausführungsform, bei der das Fluidbehältnis in zwei Bereiche aufgeteilt ist, und das Hydraulikfluid von einem Bereich in den anderen verdrängbar ist. Da in einer solchen Anordnung das Hydraulikfluid das Fluidbehältnis nicht verlassen kann, besteht keine Notwendigkeit zur Schaffung eines zusätzlichen Auffangbehältnisses für verdrängtes Hydraulikfluid. Somit läßt sich eine kompaktere bauliche Ausführung des Gurtaufrollers realisieren, was wiederum Platz und Gewicht einspart.

Vorteilhafterweise ist das Fluidbehältnis durch das Verdrängungselement in zwei Bereiche aufgeteilt. Das Verdrängungselement weist mit seiner verdrängenden und seiner raumaufteilenden Wirkung also zwei voneinander verschiedene Eigenschaften auf. Die Übernahme zweier Funktionen von einem Element sorgt auch hier für eine Gewichtsersparnis und eine Vereinfachung der Konstruktion.

In einer weiteren Ausführungsform der Erfindung erfolgt die Verdrängung des Hydraulikfluids über ein Drosselelement. Durch das Drosselelement läßt sich die Kraft erhöhen, die zu einer Verdrängung des Hydraulikfluids nötig ist. Außerdem bietet das Drosselelement zusätzlich die Möglichkeit durch die exakte Ausgestaltung des Drosselelements die zur Verdrängung des Hydraulikfluids nötige Kraft genau einzustellen. Zu den physikalischen Eigenschaften des Hydraulikfluids wird hiermit ein zusätzlicher Parameter zur Optimierung der Kraftbegrenzung geschaffen.

Besonders vorteilhaft ist es dabei, wenn das Verdrängungselement gleichzeitig Drosselelement ist. Auch in diesem Fall erfüllt es zwei Aufgaben. Teilt das Verdrängungselement das Fluidbehältnis darüber hinaus in die zuvor erwähnten zwei Bereiche, so übernimmt es als Drossel, Raumteiler und Verdränger sogar drei Funktionen, wodurch ein kompakter und einfacher Aufbau des Gurtaufrollers erreicht wird.

In einer weiteren bevorzugten Ausführungsform der Erfindung weist das kraftbegrenzende Element ein Mittel auf, welches das kraftbegrenzende Element nach einer ersten Aktivierung wieder in einen Zustand zurückversetzt, der im wesentlichen einem Zustand vor der Aktivierung ähnelt. Dadurch ist das kraftbegrenzende Element im wesentlichen reversibel und läßt sich beispielsweise im Falle eines "double impacts" zwei- oder sogar mehrfach aktivieren.

Als vorteilhaft erweist es sich, wenn das Hydraulikfluid eine elektroviskose Flüssigkeit aufweist. In einer solchen Flüssigkeit läßt sich die Viskosität und damit die Energieabsorption in dem kraftbegrenzenden Element aufgrund eines elektrischen Signals einstellen. Auf diese Weise wird, beispielsweise anhand einer Sitzbelegungserkennung, eine individuelle Einstellung des Kraftbegrenzers auf das Gewicht der zu sichernden Person ermöglicht.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine schematische Querschnittsansicht einer Ausführungsform eines erfindungsgemäßen Gurtaufrollers; und
- Fig. 2: einen mit dem Gurtaufroller in Fig. 1 erzielbaren schematischen Kraftverlauf als Funktion des Gurtbandauszugswegs.

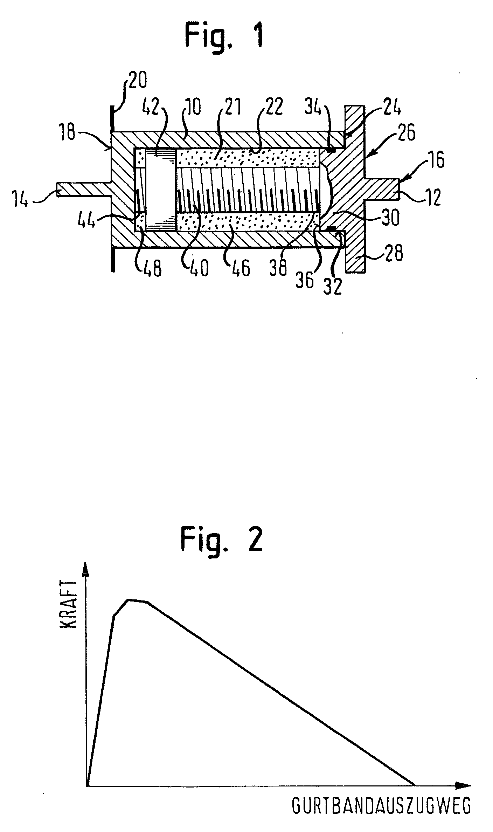

Der in Fig. 1 gezeigte Gurtaufroller für Sicherheitsgurte in Kraftfahrzeugen weist eine Spindel 10 zur Aufwicklung eines Sicherheitsgurtes (nicht gezeigt) auf, die an beiden Enden 12, 14 einer Spindelwelle 16 von einem Rahmen (nicht gezeigt) gehalten wird, der fest mit dem Kraftfahrzeug verbunden ist.

An ihrer ersten Stirnfläche 18 weist die Spindel 10 zur Führung des Sicherheitsgurtes (nicht gezeigt) eine scheibenförmige Platte 20 auf, die ein ordnungsgemäßes Aufwickeln des Sicherheitsgurtes sicherstellt.

Die Spindel 10 weist weiterhin einen mit einem Hydraulikfluid 21 gefüllten Hohlraum 22 auf, der sich in axialer Richtung über nahezu die gesamte Länge der Spindel 10 erstreckt. An der zweiten Stirnfläche 24 der Spindel 10 ist der Hohlraum 22 offen. Der Querschnitt des Hohlraums 22 kann ein Keilwellenprofil oder auch ein im wesentlichen eckiges, insbesondere sechseckiges Profil aufweisen. Lediglich im Bereich der Öffnung des Hohlraumes 22 ist sein Querschnitt rund.

An die Stirnfläche 24 grenzt ein Flansch 26, der den Hohlraum 22 verschließt und der gegenüber der Spindel 10 verdrehbar ist. Bei unfallbedingtem Ansprechen des Beschleunigungssensors ist der Flansch 26 gegenüber dem Rahmen verriegelbar.

Der Flansch 26 weist einen äußeren Teil 28 und einen inneren Teil 30 auf. Der Durchmesser des äußeren Teils 28 des Flansches 26 ist größer als der der Spindel 10, so daß der äußere Teil 28 des Flansches 26 auf der zweiten Stirnfläche 24 der Spindel 10 anliegt und dort über den Außenumfang der Spindel 10 vorsteht, wodurch eine ordnungsgemäße Aufwicklung des Sicherheitsgurtes gewährleistet ist. Der innere Teil 30 des Flansches 26 ragt in den Hohlraum 22 hinein und ist dem in diesem Bereich runden Querschnitt des Hohlraums 22 angepaßt. Zur Abdichtung der Grenzfläche zwischen Spindel 10 und innerem Teil 30 des Flansches 26 ist ein Dichtring 34, beispielsweise ein O-Ring, vorgesehen.

Weiterhin ist an der hohlrauminneren Fläche 36 des Flansches 26 ein Gewindestab 40 mit seinem einen Ende 38 angeformt, der sich in axialer Richtung über die gesamte Länge des Hohlraums 22 erstreckt. Das andere Ende 42 des Gewindestabes 40 grenzt an das dem Flansch 26 gegenüberliegende Ende des Hohlraums 22 an.

Auf den Gewindestab 40 ist eine Mutter 42 aufgeschraubt. Die Mutter 42 steht mit der Spindel 10 drehfest in Eingriff, indem sie dem eckigen, insbesondere sechseckigen Querschnitt des Hohlraums 22 angepaßt ist. Im normalen Betrieb des Gurtaufrollers befindet sich die Mutter 42 im Bereich eines Endes 44 des Gewindestabes 40. Durch Rotation der Spindel 10 läßt sich die Mutter 42 bei blockiertem Flansch 26 in axialer Richtung Die Mutter 42 teilt den Hohlraum 22 in zwei Bereiche 46, 48. Weiterhin ist die Mutter 42 mit einer oder mehreren dezentralen Öffnungen (nicht gezeigt), beispielsweise Bohrungen, in axialer Richtung versehen. Diese ermöglichen dem Hydraulikfluid 21 bei Bewegung der Mutter 42 in axialer Richtung ein Ausweichen aus dem Bereich 46 in den Bereich 48 des Hohlraums 22. Die Öffnungen sind in ihrer Dimension und Anzahl auf die Viskosität des Hydraulikfluids 21 angepaßt und wirken beim Durchgang des Hydraulikfluids 21 als Drossel. Diese Drosselwirkung sorgt für einen hohen Widerstand bei der axialen Bewegung der Mutter 42 und damit auch bei ihrer rotativen Bewegung, der bei blockiertem Flansch 26 für eine Abwicklung des Sicherheitsgurtes überwunden werden muß. Erst eine auf den Sicherheitsgurt wirkende und diesen Widerstand überwindende Kraft führt zu einer Abwicklung des Sicherheitsgurtes, wobei überschüssige Energie dissipiert wird.

Als Hydraulikfluid 21 sind vor allem zähflüssige Flüssigkeiten vorgesehen, wobei die Viskosität und Dichte des Hydraulikfluids 21 auf die Dimension der Öffnungen in der Mutter 42 abgestimmt sein müssen. Bevorzugt wird dabei eine elektroviskose Flüssigkeit eingesetzt, deren Viskosität sich mittels eines elektrischen Signals einstellen läßt.

Die Funktionsweise des in Fig. 1 gezeigten Gurtaufrollers ist folgendermaßen: Bei einem unfallbedingten Ansprechen des Beschleunigungssensors wird zunächst der Flansch 26 gegenüber dem Rahmen verriegelt. Solange die auf den Sicherheitsgurt wirkende Kraft einen vorbestimmten Wert nicht überschreitet, weil beispielsweise die Aufprallgeschwindigkeit oder die Masse der zu sichernden Person nicht ausreichend groß ist, ist die Spindel 10 durch einen Scherstift (nicht gezeigt) oder eine Drehfeder (nicht gezeigt) gegenüber dem Flansch 26 und somit auch gegenüber dem Rahmen verriegelt. In diesem Fall wird die Mutter 42 nicht bewegt.

Lediglich bei größeren Kräften, wie sie bei schwereren Personen oder höheren Aufprallgeschwindigkeiten auftreten, kann die auf den Sicherheitsgurt wirkende Kraft die durch den Scherstift oder die Drehfeder erzeugte Anprechschwelle überwinden: Die Spindel 10 rotiert trotz verriegelten Flansches 26, wobei sich die Mutter 42 mitdreht und dabei in Richtung des Endes 38 des Gewindestabes 40 geschraubt wird. Dabei wird das Hydraulikfluid 21 durch die Mutter 42 verdrängt, wobei es durch die Öffnungen in der Mutter 42 aus dem Bereich 46 in den Bereich 48 des Hohlraums 22 gelangt.

Während dieser Drehung der Spindel 10 kann sich unter Einwirkung einer Kraft *F* der Sicherheitsgurt um eine gewisse Länge s abwickeln. *F* entspricht dabei der Kraft *F,* die ein Körper (Mutter 42) vom Querschnitt *A* und Widerstandsbeiwert *c* erfährt, der mit einer Geschwindigkeit *ν*_{*fl*} von einer Flüssigkeit (Hydraulikfluid 21) mit Dichte ρ turbulent umströmt wird.

Zur Bewegung der Mutter 42 um eine Strecke *s*_{*fl*} entgegen dem Flüssigkeitsstrom muß eine Energie *E=cAρν*_{*fl*}^{*2*}*s*_{*fl*}/*2* aufgewendet werden. Setzt man diese mit der Energie *E=mν*^{*2*}/*2* gleich, mit der die zu sichernde Person mit einer Masse *m* bei einem Auffahrunfall mit einer Aufprallgeschwindigkeit *ν* in den Sicherheitsgurt fällt, so ergibt sich unter der Annahme *ν*_{*fl*}*∼ν,* daß *s*_{*fl*} ∼ *m*/*cAp.*/*cAρ*.

Unter der analogen Annahme, daß die Länge *s* , um die sich der Sicherheitsgurt abwickelt, proportional zu s_{fl} ist, ergibt sich also, daß die Abwikkellänge *s* lediglich eine Funktion der Masse der zu sichernden Person und der intrinsischen Eigenschaften des hydraulischen Kraftbegrenzers ist. Eine Abhängigkeit der Abwickellänge von der Aufprallgeschwindigkeit tritt bei einem hydraulischen kraftbegrenzenden Element nicht auf, was eine erhöhte Sicherheit für die zu sichernde Person schafft.

Aus der aufgewendeten Energie *E*=*cA*ρ*ν*_{*fl*}^{*2*}*s*_{*fl*}/*2* folgt, daß *F*=*E*/*s*=*cAρν*_{*fl*}^{*2*}/*2*. Dies bedeutet unter der Annahme *ν*_{*fl*}*∼ν*, daß die durch den Sicherheitsgurt auf die zu sichernde Person wirkende Kraft *F* proportional zu dem Quadrat der Aufprallgeschwindigkeit *ν* und damit zum Quadrat der Gurtabwickelgeschwindigkeit ist (Fig. 2). Die Kraft *F* folgt daher wie die Geschwindigkeit einer degressiven Kennlinie, die darüberhinaus leicht einstellbar ist.

### Bezugszeichenliste

- 10: Spindel
- 12: Ende
- 14: Ende
- 16: Spindelwelle
- 18: Stirnfläche
- 20: Platte
- 21: Hydraulikfluid
- 22: Hohlraum
- 24: Stirnfläche
- 26: Flansch
- 28: äußerer Teil
- 30: innerer Teil
- 32: innere Oberfläche
- 34: Dichtring
- 36: Fläche
- 38: Ende
- 40: Gewindestab
- 42: Mutter
- 44: Ende
- 46: Bereich
- 48: Bereich

## Patentansprüche

1. Gurtaufroller für Sicherheitsgurte in Kraftfahrzeugen, mit einer Spindel (10) zum Aufrollen des Sicherheitsgurtes, die bei Auslösung einer Aktivierungseinrichtung gegenüber einem festen Rahmen verriegelbar ist, und einem kraftbegrenzenden Element, das im Verriegelungsfall zwischen Spindel (10) und Rahmen geschaltet ist,
**dadurch gekennzeichnet,**
**daß** als kraftbegrenzendes Element ein hydraulisch arbeitendes Element vorgesehen ist.

2. Gurtaufroller nach Anspruch 1,
**dadurch gekennzeichnet,**
**daß** durch eine auf die Spindel (10) wirkende, einen vorbestimmten Wert überschreitende Kraft ein Hydraulikfluid (21) verdrängbar ist.

3. Gurtaufroller nach Anspruch 2,
**dadurch gekennzeichnet,**
**daß** das Hydraulikfluid (21) durch ein Verdrängungselement (42) innerhalb eines Fluidbehältnisses (22) oder aus einem Fluidbehältnis (22) hinaus verdrängbar ist.

4. Gurtaufroller nach Anspruch 3,
**dadurch gekennzeichnet,**
**daß** das Fluidbehältnis (22) zwei Bereiche (46, 48) aufweist, und daß das Hydraulikfluid (21) von einem ersten Bereich (46) in einen zweiten Bereich (48) verdrängbar ist.

5. Gurtaufroller nach Anspruch 3 oder 4,
**dadurch gekennzeichnet,**
**daß** das Fluidbehältnis (22) durch das Verdrängungselement (42) in zwei Bereiche (46, 48) aufgeteilt ist.

6. Gurtaufroller nach einem der Ansprüche 1 bis 5,
**dadurch gekennzeichnet,**
**daß** die Verdrängung eines Hydraulikfluids (21) über ein Drosselelement erfolgt.

7. Gurtaufroller nach einem der Ansprüche 3 bis 6,
**dadurch gekennzeichnet,**
**daß** das Verdrängungselement (42) gleichzeitig Drosselelement ist.

8. Gurtaufroller nach einem der Ansprüche 3 bis 7,
**dadurch gekennzeichnet,**
**daß** das Verdrängungselement (42) drehfest mit der Spindel (10) verbunden ist.

9. Gurtaufroller nach einem der Ansprüche 3 bis 8,
**dadurch gekennzeichnet,**
**daß** das Fluidbehältnis durch einen das Hydraulikfluid (21) aufweisenden Hohlraum (22) in der Spindel (10) gebildet ist, welcher an einer Stirnfläche (24) der Spindel (10) mit einem Flansch (26) verschlossen ist, der bei Auslösung der Aktivierungseinrichtung gegenüber dem festen Rahmen verriegelbar ist, wobei Spindel (10) und Flansch (26) relativ zueinander verdrehbar sind.

10. Gurtaufroller nach Anspruch 9,
**dadurch gekennzeichnet,**
**daß** der Flansch (26) einen Gewindestab (40) aufweist, der in den Hohlraum (22) hineinragt und sich im wesentlichen über dessen gesamte Länge erstreckt.

11. Gurtaufroller nach Anspruch 10,
**dadurch gekennzeichnet,**
**daß** das Verdrängungselement durch eine auf den Gewindestab (40) aufgeschraubte Mutter (42) gebildet ist, die gleichzeitig mit der Spindel (10) in drehfester Verbindung steht.

12. Gurtaufroller nach Anspruch 11,
**dadurch gekennzeichnet,**
**daß** die drehfeste Verbindung durch ein Keilwellenprofil des Hohlraums (22) und der Mutter (42) gebildet ist.

13. Gurtaufroller nach Anspruch 11 oder 12,
**dadurch gekennzeichnet,**
**daß** die Mutter (42) den Hohlraum (22) in zwei Bereiche (46, 48) aufteilt.

14. Gurtaufroller nach Anspruch 11 bis 13,
**dadurch gekennzeichnet,**
**daß** das Drosselelement durch zumindest eine dezentrale Öffnung in der Mutter (42) gebildet ist, durch welche das verdrängte Hydraulikfluid (21) von dem ersten Bereich (46) des Hohlraums (22) in den zweiten Bereich (48) entweichen kann.

15. Gurtaufroller nach einem der Ansprüche 11 bis 14,
**dadurch gekennzeichnet,**
**daß** die Mutter (42) ein Ventil aufweist, das einen im wesentlichen widerstandsfreien Rückfluß des Hydraulikfluids (21) von dem zweiten Bereich (48) in den ersten Bereich (46) ermöglicht.

16. Gurtaufroller nach einem der vorherigen Ansprüche,
**dadurch gekennzeichnet,**
**daß** das kraftbegrenzende Element reversibel ist und ein Mittel vorgesehen ist, welches das kraftbegrenzende Element nach einer ersten Aktivierung wieder in einen Zustand zurückversetzt, der im wesentlichen einem Zustand vor der Aktivierung ähnelt, und daß somit eine zwei- oder mehrfache Aktivierung des kraftbegrenzenden Elementes möglich ist.

17. Gurtaufroller nach Anspruch 16,
**dadurch gekennzeichnet,**
**daß** das Mittel durch eine zwischen eine Fläche (36) des Flansches und die Mutter (42) geschaltete Feder gebildet ist, welche die Mutter (42) nach Aktivierung des kraftbegrenzenden Elementes wieder in Richtung einer vor der Aktivierung eingenommenen Position zurückdreht.

18. Gurtaufroller nach einem der Ansprüche 2 bis 17,
**dadurch gekennzeichnet,**
**daß** das Hydraulikfluid (21) eine elektroviskose Flüssigkeit aufweist, deren Viskosität mittels eines elektrischen Signals einstellbar ist.
